# EUROPÄISCHE PATENTANMELDUNG

(11) **EP 2 464 059 A1**
(43) Veröffentlichungstag der Anmeldung: **13.06.2012**
(21) Anmeldenummer: 10191830.8
(22) Anmeldetag: 19.11.2010
(51) Int. Cl.: H04L 12/46, H04L 12/56, H04L 29/06

(54) **Schalt-Netzknoten für ein Kommunikationsnetzwerk mit integrierten Sicherheitskomponenten**

(71) Anmelder: SIEMENS AKTIENGESELLSCHAFT, 80333 München (DE)
(72) Erfinder: Gerlach, Hendrik, 91058, Erlangen (DE); Hack, Heiko, 91301, Forchheim (Kersbach) (DE); Schäffler, Andreas, 76131, Karlsruhe (DE)

(57) **Zusammenfassung**

Die Erfindung betrifft einen Schalt-Netzknoten (200) für ein Kommunikationsnetzwerk mit einer Vielzahl von Eingangsports und Ausgangsports (304), wobei der Schalt-Netzknoten (200) eine Vielzahl integrierter Sicherheitskomponenten (204) aufweist, wobei die Sicherheitskomponenten (204) zur Beschränkung einer Kommunikation zwischen den Eingangsports und den Ausgangsports (304) ausgebildet sind, wobei die Sicherheitskomponenten (204) beliebig frei mit den Eingangsports und den Ausgangsports (304) verschaltbar sind.

## Beschreibung

Die Erfindung betrifft einen Schalt-Netzknoten für ein Kommunikationsnetzwerk, ein Automatisierungssystem mit einem solchen Schalt-Netzknoten, ein Verfahren zur Kommunikation über einen Schalt-Netzknoten, sowie ein Computerprogrammprodukt. In der Automatisierungstechnik werden üblicherweise Proprietäre Busse wie Profibus und Interbus zur Vernetzung eingesetzt. Seit einiger Zeit halten aber ethernetbasierte Technologien zunehmend Einzug auch in die Automatisierungstechnik. Dieser Technologiewechsel hat Vorteile für Anwender, bringt aber auf der anderen Seite auch die gesamte Problematik der Netzwerksecurity mit. Automatisierungsnetze lassen sich mit Tools, die aus der Ethernetwelt bekannt sind, beobachten und auch angreifen.

Aus diesem Grunde sind in der Automatisierungstechnik neben z.B. Switches zur Ankopplung von Endteilnehmern und Kopplung von Netzwerksegmenten auch Sicherheitsgeräte erforderlich. Typischerweise werden abgegrenzte Bereiche wie z.B. Fertigungszellen in der Fertigungsautomatisierung durch einen Perimeterschutz abgesichert. Dabei kommen typischerweise Firewalls zum Einsatz. Bei höheren Schutz-Ansprüchen können auch VPN-Geräte zur Kopplung von Zellen Verwendung finden. Weiterhin finden sich VPN-Geräte als Zugangspunkte für einen Remote-Access (RAS).

Heute werden aktive Netzkomponenten, Endgeräte bzw. Netzsegmente über vorgeschaltete Sicherheitskomponenten, verbunden mit einer Leitung, abgesichert oder die Endgeräte selbst beinhalten eine in Software ausgeführte Securitykomponente. Dabei muss immer der gesamte Traffic durch diese Komponente fließen und geprüft werden. D.h. heute werden alle Komponenten sind als autarke Einzelgeräte ausgeführt.

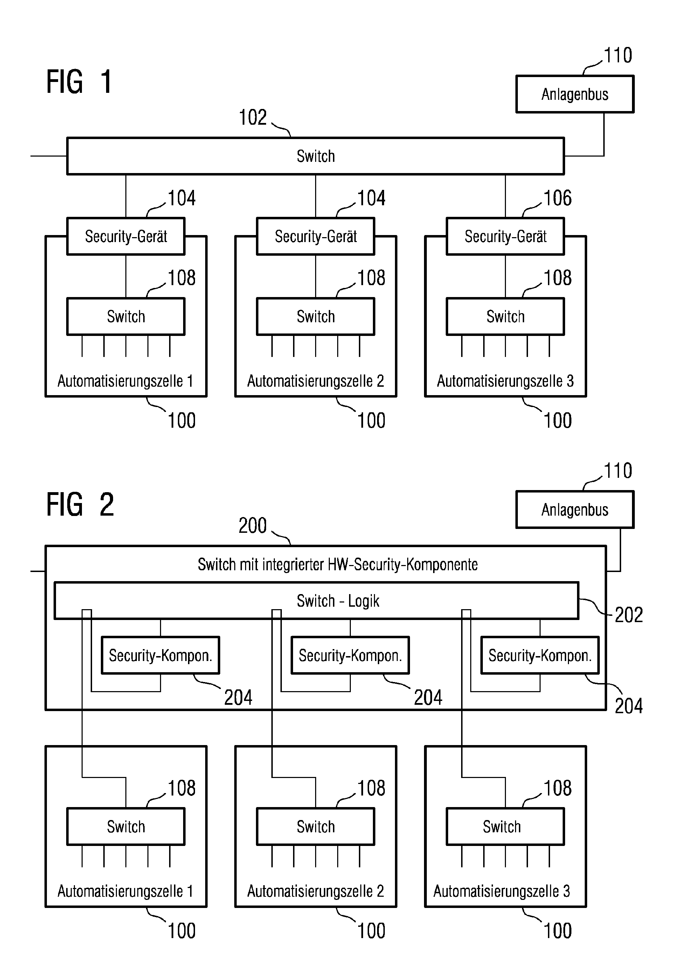

Eine typische Konfiguration von Security-Geräten und Switches, wie sie im Stand der Technik in der unteren Ebene der Automatisierungspyramide zum Einsatz gelangt, ist in Figur 1 dargestellt.

In Figur 1 sind verschiedene Automatisierungszellen 100 dargestellt, welche über Switches 108 und 102 mit einem Anlagenbus 110 kommunizieren können. Jeder Automatisierungszelle 100 ist neben einem Switch 108 auch eine Sicherheitskomponente Security-Gerät" 104 zugeordnet, wobei die Besagte Kommunikation zwischen der Automatisierungszelle 100 über den Switch 108, die Sicherheitskomponente 104 und den Switch 102 mit dem Bus 110 erfolgt.

Das Security Gerät 104 ist im einfachsten Fall eine Firewall, die das Netzwerksegment in einer Automatisierungszelle 100 vom Anlagenbus 110 trennt und damit gegen ungewollte Zugriffe von außen absichert. Anstelle einer ganzen Automatisierungszelle kann natürlich auch ein einzelnes Endgerät (wie z.B. eine Automatisierungs-CPU) geschützt werden.

In Anwendungsfällen, die eine Verschlüsselung des Datenverkehrs zwischen den Automatisierungszellen untereinander oder auch zwischen den Automatisierungszellen und einer übergeordnete Ebene erfordern, wird das Security-Gerät als VPN-Gerät ausgeführt. Gleiches gilt für den Fall, dass eine starke Authentifizierung der Teilnehmer (nicht nur basierend auf IP-Adressen, wie bei Firewalls) erforderlich ist.

Nachteilig an dem in Figur 1 gezeigten Aufbau ist z.B., dass ein Kunde für jede Zelle einen Switch kaufen muss, auch wenn in der Zelle nur wenige Ports benötigt werden und am oberen Switch noch Ports frei wären. Ferner ist nachteilig, dass das Entfernen oder das Hinzufügen eines Security-Gerätes (wenn z.B. eine Zelle noch ungeschützt angekoppelt ist) jeweils eine Änderung der Verkabelung, d.h. Umbau realer Hardware erfordert.

Obwohl es sich ferner oft um einfache Netzstrukturen handelt, hat der Kunde viele Geräte zu managen, in Figur 1 z.B. 3 Security-Geräte 100 und 4 Switches 108 und 102.

Nachteilig ist ferner, dass VLANs (Virtual Local Area Netzwerke) auf dem Anlagenbus nicht in eine Zelle weitergeführt werden können, da heutige Firewalls und VPN (weil sie auf Layer-3 arbeiten) VLAN-Tags abstreifen". Außerdem ist der Austausch eines Anlagenswitches durch einen Switch mit schnellerer Netzwerkanbindung (z.B. 100MBit) bisher nicht möglich, da Gigabit -Verbindungen oft nach Nachziehen bei den unterlagerten Komponenten erfordert, auch die Security-Geräte gegen solche mit Unterstützung der aktuellen Netzwerk-Technologie austauschen zu müssen.

Schließlich sind im Stand der Technik n den Kopplungen Anlagenbus-Switch Security-Gerät Zellenswitch jeweils 4 PHY's (physikalische Schnittstellen) zur Umsetzung auf das Übertragungsmedium (z.B. Gigabit) notwendig. Solche PHY's haben einen erheblichen Energiebedarf und eine entsprechende Verlustleistung (gerade ab Gigabit). Könnten diese Konverter eingespart werden (weil sich alle Komponenten an einer gemeinsamen Backplane befinden), so würde das nicht nur Kosten, sondern auch Energie sparen. Eine verringerte Verlustleistung hat weitere positive Nebeneffekte, wie erhöhte Lebensdauer der Bauelemente und Vereinfachungen bei der Wärmeabfuhr in den Geräten.

In vielen Anwendungsfällen wäre es wünschenswert, alle oben gezeigten Geräte in einem Gerät unterzubringen. Dies erfordert jedoch flexible Möglichkeiten zur Netzrekonfiguration. Dem gegenüber liegt der Erfindung die Aufgabe zugrunde, einen verbesserten Schalt-Netzknoten für ein Kommunikationsnetzwerk, ein verbessertes Automatisierungssystem, ein verbessertes Verfahren zur Kommunikation über einen Schalt-Netzknoten für ein Kommunikationsnetzwerk und ein verbessertes Computerprogrammprodukt zu schaffen.

Die der Erfindung zugrunde liegenden Aufgaben werden mit den Merkmalen der unabhängigen Patentansprüche gelöst. Ausführungsformen der Erfindung sind in den abhängigen Patentansprüchen angegeben.

Es wird ein Schalt-Netzknoten für ein Kommunikationsnetzwerk mit einer Vielzahl von Eingangsports und Ausgangsports geschaffen, wobei der Schalt-Netzknoten eine Vielzahl integrierter Sicherheitskomponenten aufweist, wobei die Sicherheitskomponenten zur Beschränkung einer Kommunikation zwischen den Eingangsports und den Ausgangsports ausgebildet sind, wobei die Sicherheitskomponenten beliebig frei mit den Eingangsports und den Ausgangsports verschaltbar sind.

Die Erfindung löst dabei all die oben genannten Nachteile des Standes Technik, indem die bisher autarken Geräte aktive Netzwerkkomponente", und die Security-Hardware-Komponente" mit Firewall und/oder VPN-Funktion in einem Gerät zusammengeführt werden. In anderen Worten wird die Security-Komponente als Hardware in die aktive Netzwerkkomponente (im Falle der Figur 1 einen Layer 2 Switch bzw. Layer 3 Switch) integriert. Die externen Ports der aktiven Netzwerkkomponente (z.B. Switchports) können intern dem Ausgang und Eingang der Security Hardware Komponente frei zugewiesen werden. Der über einen externen Port, der an die Sicherheitskomponente zugewiesen wird, laufende Traffic wird dann durch die Security Hardwarekomponente geleitet - allerdings nur dann, wenn das Ziel des Traffics ein Endgerät ist, dass an einen Port angeschlossen ist, der der anderen Seite der Sicherheitskomponente zugewiesen ist.

Nach einer Ausführungsform der Erfindung sind die Sicherheitskomponenten ferner zur Beschränkung einer Kommunikation zwischen verschiedenen über den Schalt-Netzknoten miteinander verbundenen Virtual Local Area Netzwerken ausgebildet. Damit können VLANs auf dem Anlagenbus z.B. bis in einzelne ausgewählte Automatisierungszellen hinein weitergeführt werden. Nach einer Ausführungsform der Erfindung sind die Sicherheitskomponenten über interne Schnittstellen des Schalt-Netzknotens mit dem Schalt-Netzknoten verbunden. Dabei erfolgt die Zusammenführung z.B. so, dass die Security-Komponente an interne Ports angeschlossen wird. Diese befinden sich typischerweise in den ASICs des Schalt-Netzknotens, im Falle eines Switches in den Switch-ASICs. In einer anderen Ausführungsvariante wird die Security-Komponente an der internen Backplane des Schalt-Netzknotens, also z.B. des Switches angeschlossen. Die Ports der Security-Komponente werden dabei so ausgeführt, dass sie sich wie andere ASICs an der gemeinsamen Backplane verhalten. Von außen betrachtet erscheint es jedoch immer so, als sei die Security-Komponente an interne Ports angeschlossen.

Nach einer Ausführungsform der Erfindung werden die Sicherheitskomponenten durch interne Virtualisierung erzeugt. In anderen Worten kann eine einzelne integrierte Sicherheitskomponente intern so virtualisiert werden, sodass es für den Anwender so aussieht, als seien mehrere Security-Komponenten integriert worden. Im Falle einer Firewall bewirkt die Virtualisierung z.B. eine komplette Trennung des Firewall-Regelsatzes in mehrere unabhängige Domänen". Gleiches gilt für die Routing-Tabellen, falls es sich um einen routenden Firewall handelt. Die Routing-Tabellen für die einzelnen Firewall-Instanzen sind dabei völlig unabhängig voneinander.

Es sei angemerkt, dass die Sicherheitskomponenten sowohl in Hardware, als auch in Software ausgebildet sein können.

Nach einer weiteren Ausführungsform der Erfindung können die Sicherheitskomponentes als Steckmodul für den Schalt-Netzknoten ausgeführt sein oder fest in den Schalt-Netzknoten integriert sein.

Nach einer Ausführungsform der Erfindung handelt es sich bei dem Schalt-Netzknoten um einen Switch oder einen Hub oder eine Bridge oder einen Router.

Nach einer weiteren Ausführungsform der Erfindung erfolgt die Beschränkung der Kommunikation durch eine Firewall-Funktion und/oder eine VPN-Funktion der Sicherheitskomponenten.

In einem weiteren Aspekt betrifft die Erfindung ein Automatisierungssystem mit einem ersten Schalt-Netzknoten nach einem der vorigen Ansprüche, wobei das Automatisierungssystem einen Anlagenbus und eine Vielzahl von Automatisierungszellen aufweist, wobei jede der Automatisierungszellen einen zweiten Schalt-Netzknoten aufweist, wobei eine Beschränkung einer Kommunikation zwischen den zweiten Schalt-Netzknoten der Automatisierungszellen und dem Anlagenbus ausschließlich durch die Sicherheitskomponenten des ersten Schalt-Netzknotens erfolgt.

In einem weiteren Aspekt betrifft die Erfindung ein Verfahren zur Kommunikation über einen Schalt-Netzknoten für ein Kommunikationsnetzwerk, wobei der Netzknoten eine Vielzahl von Eingangsports und Ausgangsports aufweist, wobei der Schalt-Netzknoten eine Vielzahl integrierter Sicherheitskomponenten aufweist, wobei das Verfahren eine Beschränkung einer Kommunikation zwischen den Eingangsports und den Ausgangsports durch die Sicherheitskomponenten umfasst, wobei das Verfahren ferner ein beliebig freies Verschalten der Sicherheitskomponenten mit den Eingangsports und den Ausgangsports umfasst. In einem weiteren Aspekt betrifft die Erfindung ein Computerprogrammprodukt mit von einem Prozessor ausführbaren Instruktionen zur Durchführung der Schritte des obig beschriebenen Verfahrens.

Im Folgenden werden bevorzugte Ausführungsformen der Erfindung anhand der Zeichnungen näher erläutert. Es zeigen:
Figur 2 einen Schalt-Netzknoten für ein Kommunikationsnetzwerk,
Figur 3 eine interne Verschaltung eines Schalt-Netzknotens,
Figur 4 eine weitere interne Verschaltung eines Schalt-Netzknotens.

Im Folgenden werden einander ähnliche Elemente mit den selben Bezugszeichen gekennzeichnet.

Die Figur 2 zeigt einen Schalt-Netzknoten 200 für ein Kommunikationsnetzwerk. Dabei wird ohne Beschränkung der Allgemeinheit beispielhaft davon ausgegangen, dass es sich bei dem Schalt-Netzknoten 200 um einen Switch handelt.

In Figur 2 sind verschiedene Automatisierungszellen 100 dargestellt, welche über Switches 108 und 200 mit einem Anlagenbus 110 kommunizieren können. Jeder Automatisierungszelle 100 ist neben einem Switch 108 auch eine Sicherheitskomponente Security-Komponente" 204 zugeordnet, wobei die Besagte Kommunikation zwischen der Automatisierungszelle 100 über den Switch 108, die Sicherheitskomponente 204 und den Switch 200 mit dem Bus 110 erfolgt.

Der Schalt-Netzknoten 200 weist eine Vielzahl nicht näher gezeigter Eingangsports und Ausgangsports auf. Die Sicherheitskomponenten 204 dienen zur Beschränkung einer Kommunikation zwischen den Eingangsports und den Ausgangsports, d.h. der individuellen Beschränkung einer Kommunikation der Automatisierungszellen 100 mit dem Anlagenbus 100.

Die Sicherheitskomponenten 204 sind in den Switch 200 so integriert, dass die Sicherheitskomponenten beliebig frei mit den Eingangsports und den Ausgangsports des Switches 200 verschaltbar sind.

Traffic vom Anlagenbus 110 zu den Zellen 100 läuft in Figur 2 über die Security-Komponenten 204, wobei diese real oder virtualisiert sein können. Traffic von einem Teil des Anlagenbusses zu einem anderen Teil des Anlagenbusses, d.h. Traffic der nicht für die Automatisierungszellen 100 bestimmt ist, läuft dagegen nicht über eine Sicherheitskomponenten 204, weil hier kein Schutzbedarf besteht.

Ändert sich die z.B. Anforderungslage kann nun durch einfache Umkonfiguration eine Sicherheitskomponente zwischen die beiden Teile des Anlagenbusses geschaltet werden, während eine oder mehrere Sicherheitskomponenten zu den Zellen wegfallen können.

In einer Ausführungsvariante kann eine spätere Aktivierung von Sicherheit vorbereitet werden. Dazu werden z.B. die externen Switchports nach einer Policy einer unsicheren Seite und einer sicheren Seite zugeordnet. Dann kann die Anlage zunächst ohne Sicherheitsbeschränkungen zwischen der sicheren und unsicheren Seite in Betrieb genommen werden. Zur gleichen Zeit, d.h. parallel, kann man die Policies auf den Security-Komponenten vorbereiten. Zu einem geeigneten Zeitpunkt werden alle Security-Komponenten aktiviert, wodurch die bisher gekoppelten Seiten aufgetrennt werden. Ab diesem Zeitpunkt unterliegt der Traffic zwischen den Bereichen den auf den Security-Komponenten vorbereiteten Policies. D.h. hier werden erst nach der Aktivierung (z.B. auch durch Stecken) der Hardwarekomponente die integrierten Sicherheitsfunktionen aktiv und sorgen erst dann für eine automatische Trennung und damit zu einer Netzsegmentierung entsprechend der in der in der Sicherheitskomponente festgelegten Policy.

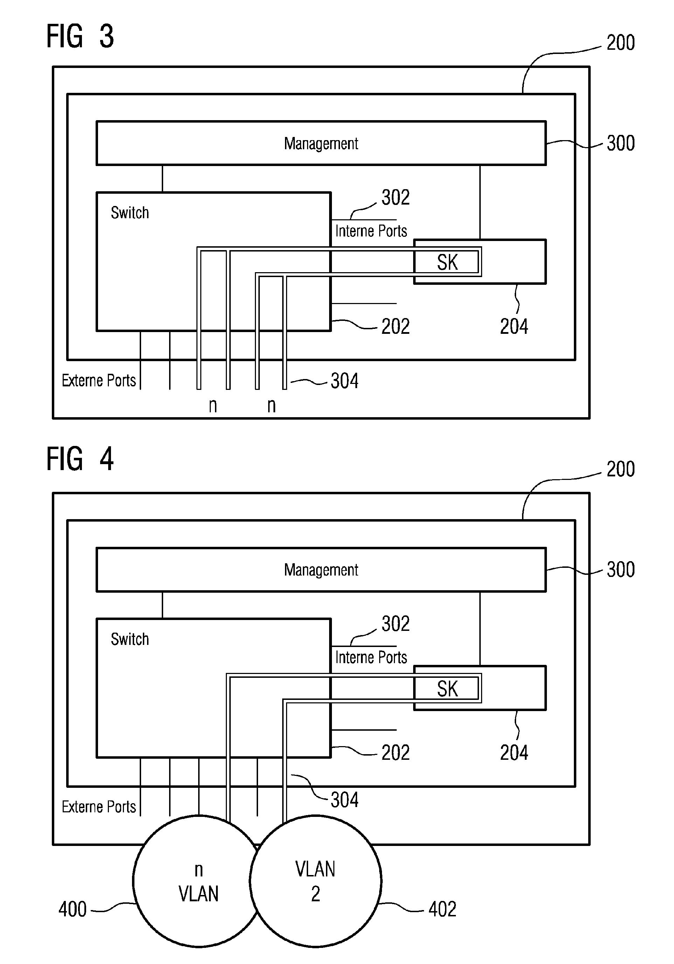

Damit ist in Figur 2 der Switch 200 in der Lage, flexibel je nach eingestellter Konfiguration eine Kommunikation der Automatisierungszellen 100 mit dem Anlagenbus 110 entweder über die Sicherheitskomponenten 204 zu leiten, oder eine direkte Kommunikation mit dem Bus 110 zu ermöglichen. Einen entsprechenden beispielhaften internen Aufbau verschiedener Switches 200 zeigen die Figuren 3 und 4:

Die Figuren 3 und 4 zeigen eine interne Verschaltung eines Schalt-Netzknotens 200. Der Schalt-Netzknoten (z.B. ein Switch) umfasst nebst der Switch-Logik 202 eine Steuervorrichtung Management" 300 und die Sicherheitskomponente 204.

Die Sicherheitskomponente 204 ist an interne Ports 302 der Switch-Logik 202 angeschlossen, wobei eine Kommunikation des Switches 200 über externe Ports 304 erfolgt.

In Figur 3 können n externe Ports 304 dem Eingang und n externe Ports 304 dem Ausgang der Sicherheitskomponente 204 zugewiesen werden. Möglich ist jedoch auch, dass n interne Ports 302 des Switches n internen Ports für die Security Hardwarekomponente 204 zuwiesen werden können.

Es können n Security Komponenten 204 zum Einsatz kommen, welche fest integriert oder steckbar im Gesamtgerät integriert werden können. Dies dient zur Vervielfältigung der Funktionen des Switches 200 und/oder zum redundanten Betrieb des Switches 200.

Wie in Figur 4 gezeigt können der interne Sicherheitskomponente 204 VLANs 400 und 402 zugewiesen werden womit es möglich ist, den Traffic der VLANs über die Security Hardwarekomponente zu leiten. In dem Beispiel der Figur 4 werden n VLANs zu einem einzelnen VLAN unter Verwendung der Sicherheitskomponente 204 geleitet.

Möglich ist jedoch auch, dass die Sicherheitskomponenten z.B. Subnetzen zugewiesen werden. Dadurch wird es möglich den Traffic der Subnetze über die Security Hardwarekomponente zu leiten und zu sichern.

Neben der Firewall- und VPN-Funktionalität der Security Hardwarekomponenten im Routing-Mode (d.h. zur Verbindung von Subnetzen) kann die Firewall- und VPN-Funktionalität auch für die Kopplung innerhalb des gleichen Subnetzes vorgesehen sein. Damit lassen sich z.B. erstmals 2 VLANs in gleichen IP-Subnetzen betreiben und über festgelegte Policies koppeln. Dieser Fall ist gerade für die Automatisierungstechnik von Bedeutung, da hier oft flache Netze (alle Geräte sind in einem IP-Subnetz) eingesetzt werden. Die Berücksichtigung dieses Use-Cases kann die Migration von bestehenden Automatisierungsnetzen hin zu voll entkoppelten VLAN-Netzen vereinfachen (über teilweise gekoppelte Netzsegmente). Damit besteht erstmals die Möglichkeit eines Mittelweges zwischen komplett ungetrennten Netzsegmenten (flaches Netz ohne VLAN) und komplett getrennten Netzsegmenten (flaches Netz mit VLAN). Es handelt sich dann um Netzsegmente in einem flachen Netz (ein IP-Subnetz), die in VLANs segmentiert wurden, aber mit der Möglichkeit, die über VLAN getrennten Netzsegmente übergangsweise oder auch dauerhaft bzgl. eines bestimmten zugelassenen Traffics (bestimmt durch die Policy der Security-Komponente) zu koppeln. Ein solches Gerät wäre dann z.B. als eine VLAN-Bridge mit flexibler Layer-2 Firewall zu bezeichnen. Zusammengefasst bietet somit ein erfindungsgemäßer Schalt-Netzknoten wesentliche Vorteile. Bei bisherigen Konzepten sind viele kleine Security Komponenten notwendig um mehrere Teilnetze oder Enteilnehmer zu sichern. Mit dem erfindungsgemäßer Schalt-Netzknoten genügt eine leistungsfähige Komponente. Es sind alle Geräteports des Gesamtgerätes absicherbar. Durch die Erweiterung aus VLAN und Subnetze können auch Teilnetze bzw. Teilnehmer bzw. Geräteports benachbarter Geräte eingebunden werden, die selbst keine Sicherheitsfunktion besitzen. Die Funktion der aktiven Sicherheitskomponente kann durch mehrfaches integrieren oder stecken vervielfältigt werden. Ferner kann durch Aggregation von Ports der Durchsatz erhöht werden. Da nur eine Kommunikation abzusichernder Teilnehmer durch die Hardware Sicherheitskomponenten geführt werden müssen, wird die Effizienz im Datendurchsatz gesteigert. Außerdem wird durch die Sicherheitskomponenten vollständig das Sicherheitsmanagement der einer entsprechenden Automatisierungsvorrichtung in den Switch integriert, was die Administration und Überwachung erleichtert. Ferne kann eine solche Sicherheitsfunktion durch die Integration nicht durch Brücken der Security-Komponente ausgehebelt werden.

### Bezugszeichenliste

- 100: Automatisierungszelle
- 102: Switch
- 104: Sicherheitskomponente
- 108: Switch
- 110: Anlagenbus
- 200: Switch
- 202: Switch-Logik
- 204: Sicherheitskomponente
- 300: Steuervorrichtung
- 302: Interne Ports
- 304: Externe Ports
- 400: VLANs
- 402: VLAN

## Patentansprüche

1. Schalt-Netzknoten (200) für ein Kommunikationsnetzwerk
mit einer Vielzahl von Eingangsports und Ausgangsports (304), wobei der Schalt-Netzknoten (200) eine Vielzahl integrierter Sicherheitskomponenten (204) aufweist, wobei die Sicherheitskomponenten (204) zur Beschränkung einer Kommunikation zwischen den Eingangsports und den Ausgangsports (304) ausgebildet sind, wobei die Sicherheitskomponenten (204) beliebig frei mit den Eingangsports und den Ausgangsports (304) verschaltbar sind.

2. Schalt-Netzknoten (200) nach Anspruch 1, wobei die Sicherheitskomponenten (204) ferner zur Beschränkung einer Kommunikation zwischen verschiedenen über den Schalt-Netzknoten (200) miteinander verbundenen Virtual Local Area Netzwerken (400; 402) ausgebildet ist.

3. Schalt-Netzknoten (200) nach Anspruch 1, wobei die Sicherheitskomponenten (204) über interne Schnittstellen des Schalt-Netzknotens (200) mit dem Schalt-Netzknoten (200) verbunden sind.

4. Schalt-Netzknoten (200) nach Anspruch 1, wobei die Sicherheitskomponenten (204) durch interne Virtualisierung erzeugt werden.

5. Schalt-Netzknoten (200) nach Anspruch 1, wobei es sich
bei dem Schalt-Netzknoten (200) um einen Switch oder einen Hub oder eine Bridge oder einen Router handelt.

6. Schalt-Netzknoten (200) nach Anspruch 1, wobei die Beschränkung der Kommunikation durch eine Firewall-Funktion und/oder eine VPN-Funktion der Sicherheitskomponenten (204) erfolgt.

7. Automatisierungssystem mit einem ersten Schalt-Netzknoten (200) nach einem der vorigen Ansprüche, wobei das Automatisierungssystem einen Anlagenbus (110) und eine Vielzahl von Automatisierungszellen (100) aufweist, wobei jede der Automatisierungszellen (100) einen zweiten Schalt-Netzknoten (108) aufweist, wobei eine Beschränkung einer Kommunikation zwischen den zweiten Schalt-Netzknoten (108) der Automatisierungszellen und dem Anlagenbus ausschließlich durch die Sicherheitskomponenten (204) des ersten Schalt-Netzknotens (200) erfolgt.

8. Verfahren zur Kommunikation über einen Schalt-Netzknoten (200) für ein Kommunikationsnetzwerk, wobei der Netzknoten eine Vielzahl von Eingangsports und Ausgangsports (304) aufweist, wobei der Schalt-Netzknoten (200) eine Vielzahl integrierter Sicherheitskomponenten (204) aufweist, wobei das Verfahren eine Beschränkung einer Kommunikation zwischen den Eingangsports und den Ausgangsports (304) durch die Sicherheitskomponenten (204) umfasst, wobei das Verfahren ferner ein beliebig freies Verschalten der Sicherheitskomponenten (204) mit den Eingangsports und den Ausgangsports (304) umfasst.

9. Computerprogrammprodukt mit von einem Prozessor ausführbaren Instruktionen zur Durchführung der Schritte des Verfahrens gemäß Anspruch 8.
